## Europäisches Patentamt

## European Patent Office

## Office européen des brevets

(11) Veröffentlichungsnummer: **0 238 955 B1**

(12) **EUROPÄISCHE PATENTSCHRIFT**

(45) Veröffentlichungstag der Patentschrift:
10.04.91 Patentblatt 91/15

(51) Int. Cl.⁵: **A47J 37/12, A47J 27/024**

(21) Anmeldenummer: 87103726.3

(22) Anmeldetag: 14.03.87

(54) **Medien-Erhitzer.**

(30) Priorität: 26.03.86 DE 3610235

(43) Veröffentlichungstag der Anmeldung:
30.09.87 Patentblatt 87/40

(45) Bekanntmachung des Hinweises auf die
Patenterteilung:
10.04.91 Patentblatt 91/15

(84) Benannte Vertragsstaaten:
AT CH DE ES FR GB IT LI SE

(56) Entgegenhaltungen:
EP-A- 0 135 707
EP-A- 0 144 973
CH-A- 629 948

(56) Entgegenhaltungen:
DE-A- 3 241 008
FR-A- 1 374 218
FR-A- 1 526 903
US-A- 2 582 103

(73) Patentinhaber: E.G.O. Elektro-Geräte Blanc u.
Fischer
Rote-Tor-Strasse Postfach 11 80
W-7519 Oberderdingen (DE)

(72) Erfinder: Knauss, Hermann
Sonnenhalde 6
W-7519 Oberderdingen (DE)

(74) Vertreter: Patentanwälte Ruff und Beier
Neckarstrasse 50
W-7000 Stuttgart 1 (DE)

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Medien-Erhitzer mit mindestens einem elektrisch beheizten und einer Medienkammer zugeordneten Strömungskanal, der einen rohrförmigen Durchlauferhitzer mit Thermosyphonwirkung und Medienöffnungen in Form von Medien-Eintritts- und Medien-Austrittsöffnungen sowie mindestens einen Verbindungsflansch aufweist, von denen einer den Außenumfang des Durchlauferhitzers mit einem Flanschteil zur Befestigung des Durchlauferhitzers an einer Kammer-Wand überragt.

Durch die US-A-2 582 103 ist ein Medien-Erhitzer bekannt-geworden, der einen im Querschnitt Polygonalen Heizbehälter aufweist, welcher am oberen Ende mit einem über den Außenumfang vorstehenden Flanschring versehen ist. Mit diesem Flanschring wird der Durchlauferhitzer gegen die Bodenwand der Medienkammer durch Schrauben verspannt. Die Bodenwand der Medienkammer muß dafür mit einem geeigneten Sitz versehen werden, der verhältnismäßig schwierig anzubringen ist. Auch ist diese Ausbildung für die Verwendung mehrerer Durchlauferhitzer nicht gut geeignet.

Gemäß der DE-A1-3 241 008 ist ein Medien-Erhitzer in Form einer Friteuse bekannt, bei welcher seitlich von der als Medienkammer vorgesehenen Fettwanne ein gesonderter Kanal mit einer elektrischen Beheizung angeordnet ist, der durch übereinander liegende Querrohre an die Fettwanne derart angeschlossen ist, daß er durch das obere Querrohr Fett ansaugt, dann erhitzt und durch das untere Querrohr im unteren Bereich wieder in die Fettwanne zurückfördert. Zwar kann hierdurch ein sehr wirksamer Umlauf des Fettes durch die Fettwanne erreicht werden, jedoch ist eine solche Friteuse insbesondere in solchen Fällen weniger geeignet, in denen die installierte Heizleistung der Friteuse besonders hoch sein soll.

Der Erfindung liegt die Aufgabe zugrunde, einen Medien-Erhitzer der beschriebenen Art zu schaffen, welcher es durch Wahl der Anzahl der verwendeten beheizten Strömungskanäle ermöglicht, unter Verwendung ein- und derselben Grundbauelemente unterschiedliche Heizleistungen zu installieren.

Dies wird bei einem Medien-Erhitzer erfindungsgemäß dadurch erreicht, daß mindestens ein Verbindungsflansch plattenförmig ausgebildet ist und einen Platten-Rand zur unmittelbaren Befestigung an mindestens einer Kammer-Wand sowie als Stirnplatte des Durchlauferhitzers eine plattenförmige Raumbegrenzung einer Kammer oder Nische bildet, wobei die plattenförmige Raumbegrenzung vom Strömungskanal mindestens eines zugehörigen Durchlauferhitzers durchsetzt ist. Dadurch kann der Erhitzer, z.B. als Heizungsbausatz, an jede beliebige Form von Medienkammern angeschlossen werden. Der Rand des Flanschteiles kann dabei lösbar an der Medienkammer oder z.B. durch Schweißen an der Wand der Medienkammer befestigt werden und auch eine Mehrzahl nebeneinander stehender Durchlauferhitzer sowie gegebenenfalls Rücklaufkanäle aufweisen. Zum Beispiel können sehr unterschiedliche Anzahlen von gleichen Durchlauferhitzern an ein- und derselben Medienkammer angebracht werden, so daß beispielsweise bei einer Einzelleistung jedes Durchlauferhitzers von etwa 1,5 kW jedes ganzzahligen Mehr- bzw. Vielfache dieser Leistung bis zu etwa 24 kW und auch mehr installiert werden kann.

Da die erfindungsgemäße Anordnung des Durchlauferhitzers einen Betrieb allein aufgrund von Thermosyphonwirkung ermöglicht, können die Durchlauferhitzer im wesentlichen, insbesondere vollständig, an der Unterseite der Medienkammer und damit sehr raumsparend so angeordnet werden, daß die Medienkammer über ihren gesamten Umfang von jeder Seite her gleich gut zugänglich ist. Die Medienkammer kann auch mit einer Anzahl von Anschlüssen für Durchlauferhitzer so versehen werden, daß nich benötigte Anschlüsse mit Blinddeckeln oder dgl. verschlossen werden können.

Ein weiterer wesentlicher Vorteil des Erfindungsgegenstandes liegt darin, daß die oben liegende Austrittsöffnung des jeweiligen Durchlauferhitzers von oben zugänglich gestaltet werden kann, wobei sie insbesondere in einer horizontalen Ebene, nähmlich beispielsweise in einer Bodenwand der Medienkammer vorgesehen ist. Dadurch lassen sich die Durchlauferhitzer im wesentlichen über ihre gesamte Länge mit einer von oben einzuführenden Bürste o.dgl. jederzeit sehr gründlich reinigen. Dies ist insbesondere der Fall, wenn die Austrittsöffnung durch das obere Rohrende und die Eintrittsöffnung durch das untere Rohrende des Durchlauferhitzers gebildet ist, wenn also keine vom Außenmantel des Durchlauferhitzers abgezweigten Querrohre vorgesehen sind.

Die Durchlauferhitzer können auch in einfacher Weise, insbesondere jeweils für sich, als geschlossene Baueinheit abnehmbar angeordnet, vorzugsweise mit beiden Enden über Steckverbindungen, Flanschverbindungen, Schraubverbindungen, selbstdichtende Schnappverbindungen o.dgl. lösbar befestigt sein, so daß einerseits im Reparaturfalle ein sehr schnelles Auswechseln einzelner Durchlauferhitzer möglich und andererseits eine noch gründlichere Reinigung durchzuführen ist.

Die Durchlauferhitzer befinden sich zweckmäßig benachbart zum Außenumfang eines an die Unterseite der Medienkammer angesetzten Medienrücklaufes, wie eines Medienschachtes, so daß sie, in Draufsicht auf den Erhitzer gesehen, an keiner Stelle über deren Außenumfang vorstehen.

Die erfindungsgemäße Ausbildung eignet sich für Medien-Erhitzer beliebiger Grundform, also beispielsweise rechteckige oder quadratische Medienkammern. Besonders vorteilhaft ist die erfindungsgemäße Ausbildung jedoch auch für runde, insbesondere kreisrund ausgebildete Medienkammern, wobei vorzugsweise die Austrittsöffnungen aller Durchlauferhitzer in der Bodenwand vorgesehen sind, die schulterförmig an die Mantelwand der Medienkammer anschließen kann.

Eine besonders vorteilhafte Weiterbildung des Erfindungsgegenstandes besteht darin, daß ein Heizwiderstand, insbesondere ein Rohrheizkörper, außerhalb des vom Medium durchströmten Kanales des Durchlauferhitzers, vorzugsweise am Außenumfang eines Rohres des Durchlauferhitzers angeordnet und vorzugsweise in hoch wärmeleitender, beispielsweise metallischer Verbindung mit diesem verbunden ist. Es ist aber auch denkbar statt dessen oder zusätzlich hierzu einen Heizwiderstand im Innern des Rohres vorzusehen, wobei zweckmäßig in diesem Rohr ein Innenrohr angeordnet ist, welches den ringspaltförmigen Strömungskanal des Durchlauferhitzers von dem an seinem Innenumfang angeordneten Heizwiderstand trennt. Ausbildungen von Durchlauferhitzern sind in den Patentanmeldungen P 35 26 186.2, P 35 18 565.1 und P 35 41 641.6 beschrieben, auf welche wegen weitere Einzelheiten Bezug genommen wird.

Durch die erfindungsgemäße Ausbildung kann für einen Medien-Erhitzer mit einer Weite der Medienkammer von beispielsweise etwa 470 mm eine verhältnismäßig große Anzahl von Durchlauferhitzern, beispielsweise zwischen 6 und 20 Durchlauferhitzern, insbesondere zwischen 8 und 16 Durchlauferhitzern verwendet werden, wodurch auch eine in ihrer Verteilung um die Mittelachse der Medienkammer sehr gleichmäßige Medienströmung erzielt werden kann. Die Gesamthöhe des Medien-Erhitzers ist mit beispielsweise etwa 560 mm im genannten Fall größer als die Weite der Medienkammer, wobei jedoch der Medienschacht und insbesondere der jeweilige Durchlauferhitzer eine geringere Höhe als die Medienkammer hat. Der Durchmesser der Durchlauferhitzer bzw. von deren Rohren kann in der Größenordnung von etwa einem Zehntel der Weite der Medienkammer liegen, wobei die Durchlauferhitzer zweckmäßig einen Rohrdurchmesser von 50 mm haben. Die Radialerstreckung der schulterförmigen Bodenwand der Medienkammer ist demgegenüber zweckmäßig mindestens um die Hälfte größer.

Diese und weitere Merkmale von bevorzugten Weiterbildungen der Erfingung gehen auch aus der Beschreibung und den Zeichnungen hervor. Ausführungsbeispiele der Erfindung sind in den Zeichnungen dargestellt und werden im folgenden näher erläutert. In den Zeichnungen zeigen :

Fig. 1 einen erfindungsgemäß als Friteuse ausgebildeten Medien-Erhitzer im Axialschnitt,

Fig. 2 den Medien-Erhitzer gemäß Fig. 1 in Draufsicht,

Fig. 3 einen Ausschnitt eines Durchlauferhitzers im Axialschnitt,

Fig. 4 ein weiteres Ausführungsbeispiel eines Durchlauferhitzers in einem axial geschnittenen Ausschnitt,

Fig. 5 eine weitere Ausführungsform einer Friteuse in teilweise geschnittener Endansicht,

Fig. 6 einen Ausschnitt der Fig. 5 in vergrößerter und geschnittener Darstellung,

Fig. 7 einen Ausschnitt der Friteuse gemäß Fig. 5 in Seitenansicht und

Fig. 8 die Friteuse gemäß Fig. 7 in Draufsicht,

Fig. 9 ein weiteres Ausführungsbeispiel eines als Friteuse ausgebildeten Medien-Erhitzers, teilweise im Schnitt,

Fig. 10 einen weiteren, für Friteusen, Heißwasserbereiter und ähnliche Fluid-Beheizungsgeräte geeigneten Medien-Erhitzer als geschlossen montierbare Baueinheit,

Fig. 11 den Medien-Erhitzer gemäß Fig. 10 in teilweise geschnittener Draufsicht,

Fig. 12 einen, insbesondere zur Dampf- oder Heißwassererzeugung geeigneten Medien-Erhitzer in Ansicht,

Fig. 13 einen Schnitt nach der Linie XIII-XIII in Fig. 12,

Fig. 14 einen Ausschnitt der Fig. 12 im Vertikalschnitt und in vergrößerter Darstellung,

Fig. 15 einen Ausschnitt der Fig. 12 in vergrößerter Darstellung und einer abgewandelten Ausführungsform,

Fig. 16 und 17 zwei weitere Ausführungsformen in Darstellungen gemäß Fig. 15,

Fig. 18 einen weiteren Medien-Erhitzer in Ansicht,

Fig. 19 einen Schnitt nach der Linie XIX-XIX in Fig. 18.

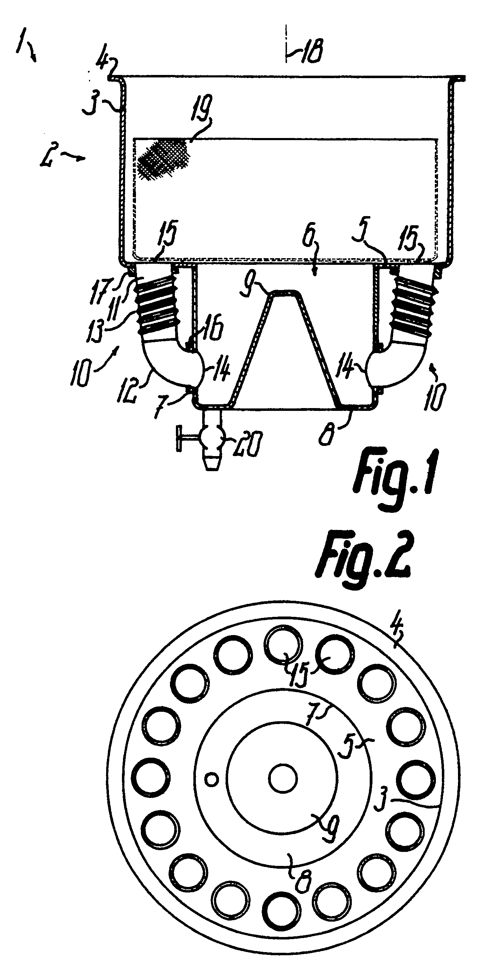

Der eine Friteuse 1 bildende Medien-Erhitzer gemäß den Fig. 1 und 2 weist als Medienkammer eine im wesentlichen zylindrische Fettwanne 2 auf, deren zylindrische Mantelwand 3 am oberen Ende in einen nach außen gerichteten Randflansch 4 und am unteren Ende in einen nach innen gerichtete ringschulterförmige Bodenwand 5 übergeht. An die Bodenwand 5 schließt ein einteilig mit dieser ausgebildeter oder durch einen gesonderten Bauteil gebildeter Medien- bzw. Fettschacht 6 an, der gleiche Grundform wie die Bodenwand 5 hat, so daß die Breite der Bodenwand 5 über den gesamten Umfang konstant ist. Die im wesentlichen zylindrische, im Durchmesser gegenüber der Mantelwand 3 um die doppelte Breite der Bodenwand 5 kleinere Mantelwand 7 des in der Mittelachse 18 der Fettwanne 2 vorgesehenen Fettschachtes 6 hat kleinere Höhe als die Mantelwand 3 und liegt vollständig unterhalb der zur Mittelachse 18 rechtwinkligen Oberseite der Bodenwand 5, so daß außer der Mantelwand 3 keinerlei Teile über die Oberseite der Bodenwand 5 vorstehen. Das untere Ende der Mantelwand 7 geht in eine ringscheibenförmige, zur Mittelachse 18 rechtwinklige Bodenwand 8 über, die im Zentrum einen nach oben spitzwinklig kegelstumpfförmig verjüngten Leit- und Verdrängungskörper 9 trägt, der einteilig mit der Bodenwand 8 ausgebildet oder durch einen gesonderten, auf der Bodenwand 8 abgedichtet angeordneten, insbesondere hohlen Körper gebildet sein kann. Die Höhe des in der Mittelachse liegenden Verdrängungskörpers 9 ist kleiner als die des Fettschachtes 6, derart daß seine obere Endfläche mit geringem Abstand unterhalb der Bodenwand 5 liegt. Der Durchmesser des Verdrängungskörpers 9 im Bereich seines oberen Endes ist etwa gleich der Breite der ringscheibenförmigen Bodenwand 8.

An der Außenseite des Medienschachtes 6 ist eine Vielzahl gleicher und gleichmäßig um die Mittelachse 18 verteilter Durchlauferhitzer 10 vorgesehen, wobei im dargestellten Ausführungsbeispiel sechzehn Durchlauferhitzer 10 angeordnet sind, von denen jeder in einer Axialebene der Mittelachse 18 derart steht, daß jeweils zwei einander gegenüberliegende Durchlauferhitzer 10 in einer gemeinsamen Axialebene vorgesehen sind. Die lichten Abstände zwischen benachbarten Durchlauferhitzern 10 können dabei kleiner als ihr Außendurchmesser sein.

Jeder Durchlauferhitzer 10 weist ein geradliniges, zylindrisches Rohr 11 auf, an dessen unteres Ende ein annähernd viertelkreisförmiger Rohrkrümmer 12 anschließt, der einteilig mit dem Rohr 11 ausgebildet, durch einen gesonderten, unlösbar mit dem Rohr 11 verbundenen Bauteil gleichen Durchmessers gebildet oder aber über eine leicht lösbare Rohrverbindung am zugehörigen Ende des Rohres 11 achsgleich zu diesem anschließend befestigt sein kann. Die Rohre 11 sind unter gleichen, sich nach oben öffnenden spitzen Winkeln zur Mittelachse 18 angeordnet und schließen mit ihren oberen Enden unmittelbar an die Bodenwand 5 an, während die unteren, gegen die Mittelachse 18 gerichteten Enden der Rohrkrümmer 12 unmittelbar an die Mantelwand 7 des Fettschachtes 6 anschließen. Dadurch bilden die unteren bzw. die inneren Enden der Rohrkrümmer 12 Eintrittsöffnungen 14, die zum Ringkanal zwischen die Mantelwand 7 und dem Verdrängungskörper 9 offen sind und deren Mittelachsen etwa rechtwinklig zur Mittelachse 18 liegen, wobei die Eintrittsöffnungen 14 mit einem annähernd ihrer lichten Weite entsprechenden Abstand oberhalb der Bodenwand 8 vorgesehen sind, so daß zwischen den Eintrittsöffnungen 14 und der Bodenwand 8 ein ringförmiger Sumpfraum für die Ablagerung von Feststoffen gebildet ist. Die oberen Enden der Rohre 11 bilden Austrittsöffnungen 15, die in der Ebene der Oberseite der Bodenwand 5 liegen und von der oberen Wannenöffnung der Fettwanne 2 her jederzeit zugänglich sind. Die einwärts gerichteten Enden der Rohrkrümmer 12 sind über Anschlüsse 16 abgedichtet an der Mantelwand 7 befestigt wobei diese Anschlüsse 16 zur Lösung des Durchlauferhitzers 10 von der Außenseite des Fettschachtes 6 her zugänglich sind. Über entsprechende Anschlüsse 17 sind die oberen Enden der Rohre 11 an der Bodenwand 5 lösbar befestigt, wobei diese Anschlüsse 17 von der Unterseite der Bodenwand 5 her zugänglich sind. Der Außendurchmesser der Rohre 11 ist kleiner als die Breite der Bodenwand 5, derart, daß ihr oberes Ende in Draufsicht auf die Friteuse sowohl mit Radialabstand von der Innenseite der Mantelwand 3 als auch mit Radialabstand vom Außenumfang der Mantelwand 7 liegt. Diese Abstände sind jedoch kleiner als der Außendurchmesser des Rohres 11 bzw. etwa halb so groß.

Auf die Bodenwand 5 kann ein Fritierkorb 19 mit seiner Bodenwand gestellt werden, wobei dieser Fritierkorb 19 geringfügig kleinere Weite als die Fettwanne 2 und gegenüber dieser kleinere Höhe hat. Der heraushebbare Fritierkorb 19 deckt mit seiner siebartig durchlässigen Bodenwand die Austrittsöffnungen 15 der Durchlauferhitzer 10 ab.

An der Bodenwand 8 des Fettschachtes 6 ist ein beispielsweise mit einem Ventil absperrbarer Ablauf 20 für das Fett vorgesehen, wobei dieser Ablauf 20 mit Abstand unterhalb der Eintrittsöffnungen 14 liegt.

An dem Rohr 11 jedes Durchlauferhitzers 10 ist ein gesonderter, elektrischer Heizwiderstand 13 wendelförmig angeordnet, wobei sich dieser Heizwiderstand 13 über den größten Teil der Länge des Rohres 11, nicht jedoch bis in den Bereich des zugehörigen Rohrkrümmers 12 erstreckt. Der Heizwiderstand 13 ist zweckmäßig durch einen Rohrheizkörper gebildet, der in gut wärmeleitender Verbindung wendelförmig am Außenumfang des metallischen Rohres 10 angeordnet ist, so daß das Fett nicht in unmittelbare Berührung mit dem Rohrheizkörper kommt. Beim Beheizen der Durchlauferhitzer 10 über ein Leistungssteuergerät wird das Fett infolge von Thermosyphonwirkung durch die Eintrittsöffnungen 14 innerhalb des Fettschachtes 6 bzw. von dessen ringkanalförmigen Raum angesaugt und dann nach Aufheizung im Bereich der Rohre 11 nach oben durch die Eintrittsöffnungen 15 in die Fettwanne 2 herausgeführt, wo das Fett zunächst entlang der Mantelwand 3 und dann in einer bogenförmig nach innen gegen die Mittelachse 18 gerichteten Strömung wieder zurück nach unten gegen den Leit- und Verdrängungskörper 9 geführt wird, welcher das Fett durch seine Formgebung den Eintrittsöffnungen 14 zuführt. Das Fett strömt also in einer ringförmigen Walze durch die Fettwanne 2 und die Durchlauferhitzer 10, wobei die Strömung beim Einströmen in den Fettschacht 6 durch den zentralen Verdrängungskörper 9 im Zentrum geteilt und über den Umfang gleichmäßig nach außen gelenkt wird. Es ist auch denkbar, keinen Verdrängungskörper 9 vorzusehen und beispielsweise die Bodenwand 8 durchgehend eben auszubilden, jedoch ergibt sich dadurch ein größeres Fett- Aufnahmevolumen der Friteuse 1.

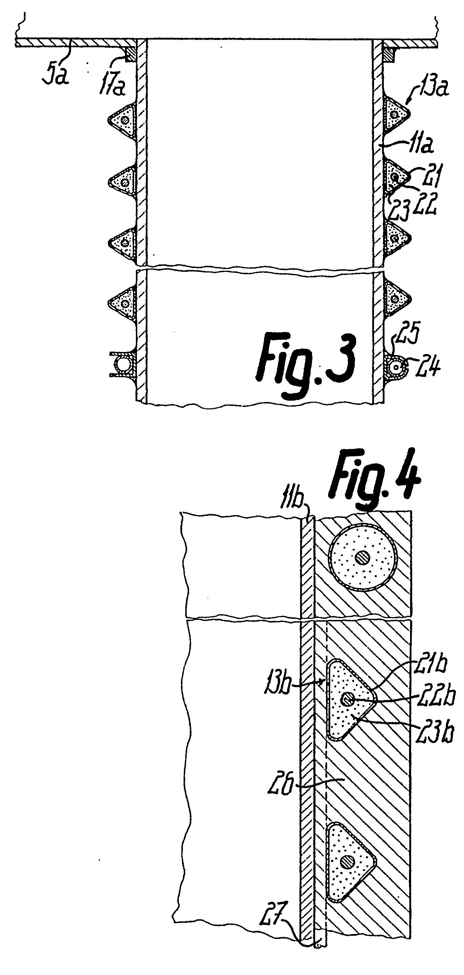

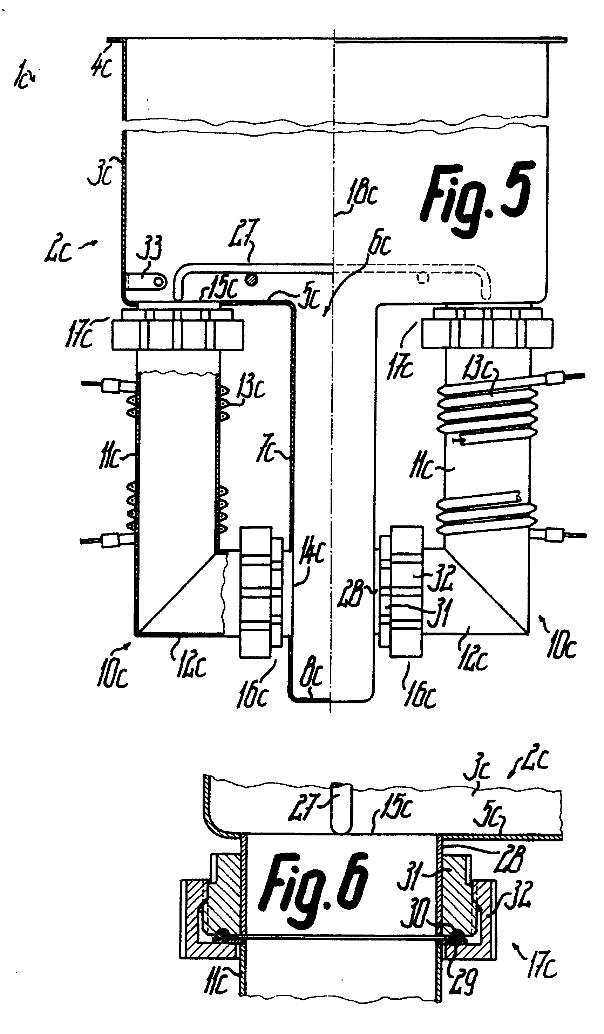

Wie Fig. 3 zeigt, sind die Heizwiderstände 13a zweckmäßig durch Rohrheizkörper gebildet, die in einem dünnwandigen, rohrförmigen metallischen Mantel 21 einen gegenüber ihnen berührungsfrei in eine Isoliermasse 23 eingebetteten Heizleiter 22 aufweisen. Obwohl im Querschnitt kreisrunde Rohrheizkörper denkbar sind, wie sie im oberen Bereich in Fig. 4 dargestellt sind, ist es jedoch zweckmäßig, wenn die Rohrheizkörper im Querschnitt eine abgeflachte Seite aufweisen, mit welcher sie an der zugehörigen Fläche des Rohres 11a anliegen, wobei sie an dieser Fläche beispielsweise mit Lötmaterial befestigt sein können. Eine solche Abflachung ergibt sich insbesondere bei im Querschnitt dreieckförmiger, insbesondere etwa gleichseitig dreieckförmiger Ausbildung des Rohrheizkörpers. Der wendelförmige Rohrheizkörper kann vor der Montage auf dem Rohr 11a so vorgebogen sein, daß sein Innendurchmesser geringfügig kleiner als der Außendurchmesser des Rohres 11a ist, wonach er unter federnder Aufweitung auf das Rohr 11a aufgeschoben und dann freigegeben wird, so daß er unter seiner eigenen Vorspannung eng am Außenumfang des Rohres 11a anliegt und dann beispielsweise durch Anlegieren wärmeleitend am Rohr befestigt werden kann. Die Anschlüsse, von denen in Fig. 3 nur der Anschluß 17a an der Bodenwand 5a dargestellt ist, können durch reine Steckverbindungen gebildet sein, die beispielsweise einen geringfügig konischen Stecksitz haben, so daß eine sichere Abdichtung gewährleistet ist. Im übrigen sind in den Fig. 3 bis 8 für einander entsprechende Teile die gleichen Bezugszeichen wie in den Fig. 1 und 2, jedoch in Fig. 3 mit dem Index "a", in Fig. 4 mit dem Index "b" und in den Figuren 5 bis 8 mit dem Index "c" verwendet.

Wie Fig. 3 ferner zeigt, kann im Bereich des Rohres 11a, insbesondere unterhalb oder oberhalb des Heizwiderstandes 13a mindestens ein Temperaturfühler 24 eines Leistungssteuergerätes bzw. eines auch als Trockengehschutz geeigneten Temperaturbegrenzers vorgesehen sein, wobei der Temperaturfühler 24 zweckmäßig ein mit einer Ausdehnungsflüssigkeit gefüllter rohr- bzw. stabförmiger Fühler ist, der über eine Kapillarleitung mit einem auf einen Schalter wirkenden Ausdehnungsglied, wie einer Druckdose verbunden ist, die ihrerseits Bestandteil des hydraulischen Ausdehnungssystemes ist. Der Temperaturfühler 24 ist zweckmäßig in gut wärmeleitender Verbindung mit dem Rohr 11a an dessen Außenumfang angeordnet, wofür ein Halteprofil 25 aus einem gut wärmeleitenden, insbesondere metallischen Werkstoff vorgesehen ist, das seinerseits, beispielsweise durch Lötung bzw. Anlegieren in sehr gut wärmeleitender Verbindung mit dem Rohr 11a steht. Dieses im Querschnitt U-förmige Halteprofil 25 ist im Ausgangszustand so ausgebildet, daß der Temperaturfühler 24 im wesentlichen über seine ganze Länge ununterbrochen eingelegt werden kann, wonach es durch Verformung so geschlossen wird, daß es eng am Außenumfang des Temperaturfühlers 24 anliegt und diesen formschlüssig hält. Im dargestellten Ausführungsbeispiel werden die Schenkel des mit seinem Profilquersteg am Rohr 11a befestigten Halteprofiles 25 so gegen den Umfang des Temperaturfühlers 24 gebogen, daß ihre Längskanten einander annähernd treffen.

Der Heizwiderstand 13b gemäß Fig. 4 ist in einen Gußkörper 26 vollständig eingebettet, der seinerseits den Außenumfang des Rohres 11b im Bereich zwischen den Enden des Heizwiderstandes 13b ununterbrochen anliegend umgibt. Dies kann beispielsweise dadurch erreicht werden, daß als Innenform zur Herstellung des hülsenförmigen Gußkörpers 26 unmittelbar das Rohr 11b selbst verwendet wird, daß also der Gußkörper 26 auf das Rohr 11b gegossen wird. Der Gußkörper 26 besteht zweckmäßig aus einem Werkstoff mit guten Wärmeleiteigenschaften, jedoch relativ niedrigem Schmelzpunkt, insbesondere Aluminium, während das Rohr 11b aus einem gegenüber Nahrungsmitteln unempfindlichen Werkstoff, vorzugsweise rostfreiem Stahl besteht, der üblicherweise keine besonders guten Wärmeleiteigenschaften hat. Um dabei eine örtliche Überhitzung des Mantels des Rohres 11b durch die Wendeln des Heizwiderstandes 13b zu verhindern, liegt der Heizwiderstand 13b nicht unmittelbar am Außenumfang des Rohres 11b an, sondern er hat einen geringen Abstand von dieser zugehörigen Fläche des Rohres 11b. Dadurch wird von dem Heizwiderstand 13b zunächst der Gußkörper 26 beheizt, welcher die aufgenommene Wärme gleichmäßig über die gesamte Länge verteilt auf den Rohrmantel weiterleitet. Um diesen Abstand des Heizwiderstandes 13b zu erzielen, sind zweckmäßig Distanzglieder in Form beispielsweise von achsparallel zum Rohr 11b angeordneten Drähten 27 vorgesehen, die zwischen dem radial einwärts vorgespannten Heizwiderstand 13b und dem Rohr 11b vor dem Herstellen des Gußkörper 26 angeordnet werden und nach dem Herstellen des Gußkörpers 26 in diesen eingebettet sind. Der am Außenumfang zweckmäßig ebenfalls zylindrische Gußkörper 26 ist im Querschnitt so ausgebildet, daß seine Außenumfangsfläche weiter vom Heizwiderstand 13b liegt als seine an die Außenumfangsfläche des Rohres 11b anschließende Innenumfangsfläche. Der jeweilige Durchlauferhitzer kann am Außenumfang auch mit einer Isolierung ummantelt sein, um Wärmeverluste zu senken.

Die Friteuse 1c gemäß den Figuren 5 bis 8 ist in Draufsicht länglich rechteckig und weist entlang ihrer Längsseiten zwei einander gegenüberstehende Reihen von gleichen Durchlauferhitzern 10c auf, wobei jeweils zwei Durchlauferhitzer paarweise einander gegenüberstehen und die Durchlauferhitzer 10c dicht an dicht über die gesamte Länge der Fettwanne 2c bzw. des Fettschachtes 6c verteilt sind. Der gegenüber der Fettwanne 2c verhältnismäßig schmale, beispielsweise nur etwa ein Fünftel von deren Breite aufweisende und daher von Verdrängungskörpern freie Fettschacht 6c reicht über die gesamte Länge der Fettwanne 2c, d.h. bis zu beiden Endwandungen dieser Fettwanne 2c und hat im wesentlichen gleiche Höhe wie die Fettwanne 2c. Die seitlichen Längs-Wandungen 7c des Fettschachtes 6c stehen vertikal und parallel zueinander, wobei der Fettschacht 6c unterhalb der Eintrittsöffnungen 14c einen Sumpf- bzw. Kalt-Sumpf bildet. Die Austrittsöffnungen 15c liegen verhältnismäßig nahe bzw. unmittelbar benachbart zur Mantelwand 3c der Fettwanne 2c und damit im wesentlichen so weit wie möglich entfernt bzw. weiter entfernt von der zugekehrten Wandung 7c des Fettschachtes 6c.

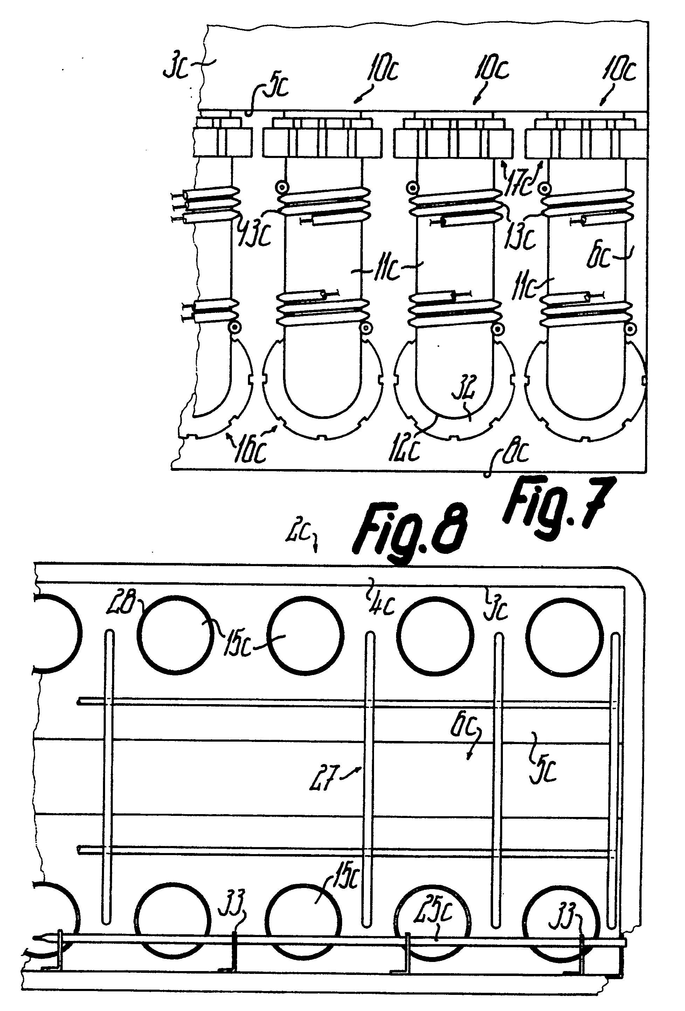

Der Durchlaufkanal jedes Durchlauferhitzers 10c ist durch zwei winkelförmig auf Gehrung aneinander gesetzte Rohre 11c, 12c gleichen Durchmessers gebildet, wobei das vertikale Rohr 11c wesentlich länger als das untere, annähernd horizontale Rohr 12c ist und sich im Übergangsbereich zwischen den beiden Rohren ein erweiterter Innenquerschnitt ergibt. Wie insbesondere Fig. 6 zeigt, ist jeder Anschluß 16c bzw. 17c des jeweiligen Durchlauferhitzers 10c durch eine Rohrkupplung gebildet. Diese weist einen möglichst kurzen, über die Unterseite der Bodenwand 5c bzw. über die Außenseite der Wandung 7c vorstehenden und an dieser durch Einsetzen befestigten Rohrstutzen 28 auf, auf den eine mit einem Außengewinde versehene Gewindemuffe 31 aufgesetzt und beispielsweise derart durch Hartlötung befestigt ist, daß ihre zugehörige Stirnfläche im wesentlichen in einer Ebene mit der äußeren Stirnfläche des Rohrstutzens 28 liegt. Am zugehörigen Ende des Rohres 11c bzw. 12c des Durchlauferhitzers 10c ist jeweils ein nach außen vorstehender, ringscheibenförmiger Flanschring 29 befestigt, der nur mit geringstem Spaltabstand vom Ende des Rohrstutzens 28 bzw. der Gewindemuffe 31 liegt und einen gegenüber deren Gewinde-Kerndurchmesser geringfügig kleineren Außendurchmesser aufweist. In eine stirnseitige Ringnut der Gewindemuffe 31 ist eine Ringdichtung 30 eingesetzt, an welcher der Flanschring 29 mit Vorspannung anliegt, wobei der Flanschring 29 mit einer auf die Gewindemuffe 31 aufgeschraubten und ihn drehbar hintergreifenden Überwurfmutter 32 so gegen die Ringdichtung 30 gespannt ist, daß der Spalt zwischen dem Rohrstutzen 28 und dem zugehörigen Rohr 11c bzw. 12c des Durchlauferhitzers 10c praktisch geschlossen ist. Die Gewindemuffe 31 reicht nahezu bis an die zugehörige Wandung 5c bzw. 7c, wobei sie auch einteilig mit dem Rohrstutzen 28 so ausgebildet sein kann, daß sie unmittelbar in die zugehörige Wandung 5c bzw. 7c eingesetzt bzw. an dieser befestigt ist. Sowohl die Gewindemuffe 31 als auch die Überwurfmutter 32 weist am Umfang Schlüsselnuten für einen Nutenschlüssel auf, so daß mit Werkzeugen der zuletzt genannten Art ein sehr sicheres Anziehen und Lösen der Rohrkupplung gewährleistet ist. Der Abstand zwischen benachbarten Durchlauferhitzern 10c ist praktisch nur so groß, wie es erforderlich ist, daß die Rohrkupplungen nebeneinander Platz haben und noch mit einem Werkzeug eingegriffen werden kann. Der Axialabstand zwischen benachbarten Durchlauferhitzern 10c liegt in der Größenordnung des Doppelten von deren lichten Querschnitt.

Wie die Figuren 5 und 8 ferner zeigen, ist auf der Bodenwand 5c ein herausnehmbares, flaches Auflagergestell 27 für den nicht näher dargestellten Frittierkorb vorgesehen, das aus quer zur Längsrichtung der Fettwanne 2c liegenden und in deren Längsrichtung hintereinander mit Abstand angeordneten gleichen Bügeln sowie deren Auflager-Querstege an der Unterseite verbindende Längsstäbe beiderseits des Fettschachtes 6c gebildet ist. Die Bügel stehen mit ihren unteren Schenkelenden zwischen benachbarten Austrittsöffnungen 15c auf der Bodenwand 5c auf.

In den Figuren 5 und 8 ist weiterhin ein in geringer Höhe über der Bodenwand 5c und parallel zu dieser, jedoch unterhalb der Auflagerfläche des Auflagergestelles 27 liegendes, im wesentlichen geradliniges Schutzrohr 25c für die Aufnahme eines stabförmigen, nicht näher dargestellten Temperaturfühlers dargestellt. Das eine, innerhalb der Fettwanne 2c liegende Ende dieses Schutzrohres 25c ist geschlossen, während das Schutzrohr 25c mit dem anderen Ende die zugehörige Endwand der Fettwanne 2c abgedichtet durchsetzt, so daß der Temperaturfühler jederzeit herausgezogen werden kann. Das Schutzrohr 25c ist mit im Abstand zueinander liegenden, winkelförmigen Haltern 33 so an einer Längswand 3c der Fettwanne 2c angeordnet, daß der Temperaturfühler im Strömungsbereich der Austrittsöffnungen 15c einer Mehrzahl hintereinander liegender Durchlauferhitzer 10c liegt, d.h. daß der Temperaturfühler in Draufsicht gemäß Fig. 8 die Austrittsöffnungen 15c kreuzt und damit von den beispielsweise etwa zwölf Durchlauferhitzern annähernd die Hälfte hinsichtlich ihrer Austrittstemperatur erfaßt. Die Anschlußenden aller Heizwiderstände 13c sind von dem Fettschacht 6c bzw. der zugehörigen Längs-Mittelebene 18c der Friteuse 1c nach außen gerichtet, so daß ein einfacher Anschluß möglich ist.

Bei einer Ausführungsform des Durchlauferhitzers 10c gemäß den Fig. 5 und 6 ist es auch möglich, dadurch für den Durchlauferhitzer ein ausschließlich geradliniges, an beiden Enden im wesentlichen rechtwinklig zu seiner Mittelachse begrenztes bzw. abgeschnittenes Rohr 11c zu verwenden, daß der untere, winkelförmige Endabschnitt des Durchlauferhitzers durch ein Winkelrohr oder zwei gesonderte, auf Gehrung im Winkel aneinandergefügte Rohrstücke gebildet ist, von welchen dasjenige, das an das Rohr 11c anschließt, an seinem oberen Ende ebenfalls im wesentlichen rechtwinklig zur Mittelachse des Rohres 11c begrenzt ist. Die an das Rohr 11c unmittelbar anschließenden Rohrstücke können dabei auch mit dem Rohr 11c stumpf aneinanderliegend verschweißt sein, so daß für die Befestigung der Durchlauferhitzer praktisch ausschließlich Schweißverbindungen vorgesehen sind. Ist dagegen eine lösbare Schraubverbindung vorgesehen, so ist es auch denkbar, statt des Rohrstückes 28 an der Bodenwand 5c bzw. an der Mantelwand 7c unmittelbar die Gewindemuffe 31 durch Schweißung o.dgl. zu befestigen. Liegt die Ringdichtung 30 statt an der Stirnseite des Flanschringes 29 im Bereich des bzw. an dem Außenumfang des Rohres 11c in einer stirnseitigen, zur Gewindemuffe 31 offenen Ringnut, die am Außenumfang sowie am Boden durch einen im Querschnitt beispielsweise winkelförmigen, am Außenumfang des Rohres 11c befestigten Flanschring begrenzt sein kann, welcher zweckmäßig die stirnseitige Anlagefläche für die Überwurfmutter 32 bildet, so kann das Rohrende des Rohres 11c unmittelbar unter Pressung an die zugehörige Stirnseite der, gleiche Innenweite wie das Rohr 11c aufweisenden Gewindemuffe 31 unter Pressung angelegt werden. Die Anordnung ist dabei so getroffen, daß die Stirnfläche des Rohres 11c nahezu lückenlos dicht an der Stirnfläche der Gewindemuffe 31 anliegt und hierbei die bestimmungsgemäße Dichtungspressung der Ringdichtung 30 erreicht ist, so daß die Dichtung 30 praktisch nicht vom Medium erreicht wird, sondern nur in Notfällen einer Undichtigkeit zwischen den metallischen Anlageflächen des Rohres 11c und der Gewindemuffe 31 wirksam zu werden braucht.

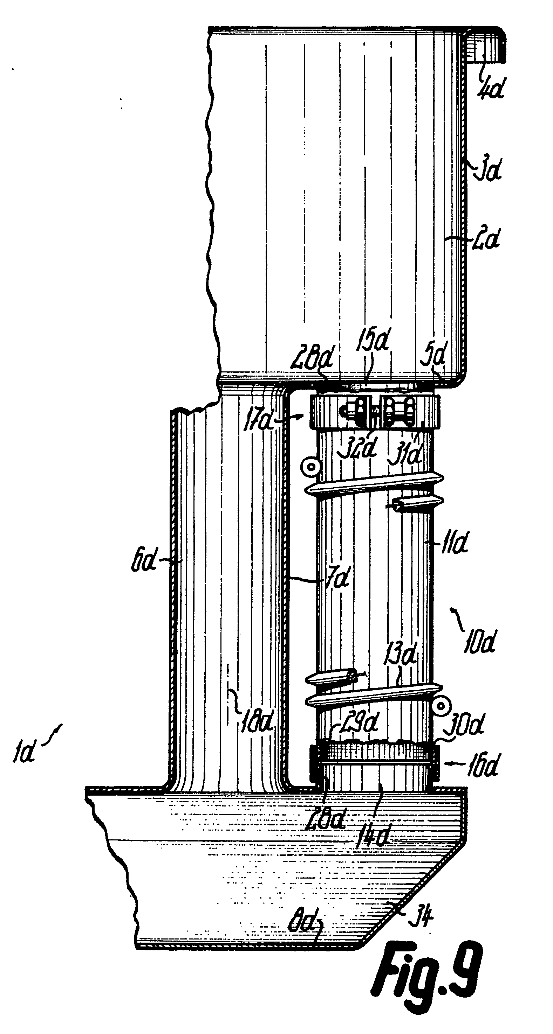

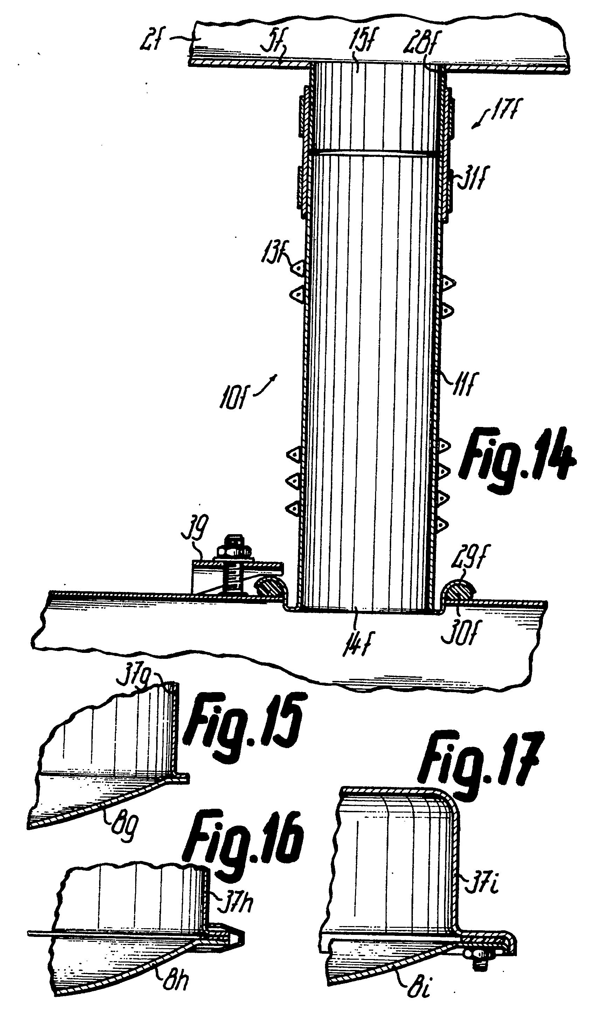

In den Figuren 9 bis 19 sind für einander entsprechende Teile im wesentlichen die gleichen Bezugszeichen wie in den übrigen Figuren, jedoch jeweils mit unterschiedlichen Buchstaben-Indices verwendet.

Bei der Friteuse 1d gemäß Fig. 9 sind die Rohre 11d der Durchlauferhitzer 10d ebenfalls durch gleiche, geradlinige Rohrabschnitte mit rechtwinklig zu ihren Mittelachsen liegenden flanschfreien Endflächen gebildet, die dadurch besonders einfach montiert und gefertigt werden können. Die Anschlüsse 16d, 17d sind jeweils durch den zugehörigen Rohrstutzen 28d und das zugehörige Rohrende 29d des Rohres 11d, eine um den Ringspalt der nahezu aneinanderstoßenden Endflächen gelegte Banddichtung 30d und eine um diese gelegte Rohrschelle 31d gebildet, welche mit einer tangentialen Spannschraube 32d gegen die Umfangsflächen der Rohrstutzen und des Rohres 11d so festgezogen werden kann, daß sich die Rohrstutzen 28d und das Rohr 11d unter den auftretenden Wärmespannungen gegeneinander geringfügig axial bewegen können.

Der Medienrücklauf 6d geht an seinem unteren Ende in eine erweiterte Zulaufkammer 34 für die Durchlauferhitzer 10d über, wobei diese Zulaufkammer 34 in Draufsicht etwa gleiche Weite wie die Medienkammer 2d aufweisen kann, jedoch gegenüber dieser zweckmäßig geringere Höhe hat und nach unten in der Weite abnehmen kann. Diese, für alle Durchlauferhitzer 10d gemeinsame Zulaufkammer 34 kann im Falle der Verwendung des Medien-Erhitzers 1d als verhältnismäßig großvolumige Kaltzone für das zu erhitzende Fett, Öl o.dgl. und daher als Sumpf für die Ablagerung von Festpartikeln verwendet werden, die somit nicht mehr in den Kreislauf der Beheizung zurückgeführt werden. Die Deckbzw. Anschlußwand der Zulaufkammer 34 für die Durchlauferhitzer 10d liegt zweckmäßig parallel zur Bodenwand 5d und begrenzt mit dieser sowie mit der Mantelwand 7d des Medienrücklaufes 6d eine gegenüber der Mantelwand 3d und der entsprechenden, aufrechten Begrenzungswand der Zulaufkammer 34 einspringende Nische, in welcher alle Durchlauferhitzer 10d so angeordnet werden können, daß sie im wesentlichen gegenüber diesen Wandungen zurückversetzt und somit sehr gut geschützt sind. Die Mantelwand 7d kann in einem bestimmten Maße der Heizstrahlung des Heizwiderstandes 13d ausgesetzt werden, so daß das Medium im Medienrücklauf 6d zumindest nicht weiter abgekühlt wird. Im Falle der Verwendung des Medien-Erhitzers 1d als Heiß- bzw. Kochendwasserbereiter oder als Dampferzeuger, kann die Zulaufkammer 34 als Kalk-Abscheidekammer eingesetzt werden, wobei wenigstens eine ihrer Wandungen, beispielsweise ihr Boden, wenigstens teilweise als Deckel abnehmbar ist, so daß sie leicht entleert bzw. gereinigt werden kann. Alle Durchlauferhitzer 10d bilden mit der Medienkammer 2d, dem Medienrücklauf 6d und der Zulaufkammer 34 einen Umlauferhitzer, welchen das Medium zur stets erneuten Aufheizung im Kreislauf durchläuft, so, daß es an seiner Bedarfsstelle in der Medienkammer 2d stets die gewünschte Temperatur hat.

Eine besonders vorteilhafte Weiterbildung des Erfindungsgegenstandes besteht darin, daß auch der Medienrücklauf einen von der Medienkammer gesonderten Bauteil bildet, beispielsweise durch einen außerhalb der Medienkammer liegenden gesonderten, insbesondere rohrförmigen Kanal gebildet ist, welcher der räumlichen Anordnung der Durchlauferhitzer so zugeordnet ist, daß er einen mit diesem im Verbund stehenden Rohrteil bildet. Der Medienrücklauf kann also beispielsweise durch mindestens ein im Raster mit den Durchlauferhitzern angeordnetes Rohr gebildet sein, wobei es denkbar ist, auch solche Rohre, die als Medienrücklauf verwendet werden, mit einer Heizeinrichtung auszustatten, so daß sie durch Ein- und Abschalten der Beheizung wahlweise als Durchlauferhitzer und als Medienrücklauf eingesetzt werden können und so unterschiedliche Strömungssituationen erzeugt werden können. Besonders vorteilhaft ist es, wenn alle Durchlauferhitzer eine in sich geschlossene Montage-Baugruppe bilden, die als Ganzes mit mindestens einem Flanschkörper an einer unteren und/oder oberen Medienkammer anzuschließen ist. Bestandteil dieser Baugruppe kann dann auch mindestens ein Medienrücklauf sein, so daß eine Umlauferhitzer-Baueinheit gebildet ist, deren Rohre zwischen ihrer Enden zweckmäßig gegenseitig berührungsfrei und ohne direkte Verbindung liegen, während wenigstens ihre oberen oder unteren Enden durch den beispielsweise plattenförmigen bzw. wandungs- oder deckelartigen Flanschkörper miteinander so verbunden sind, daß ihre Endöffnungen etwa in diesem Flanschkörper liegen.

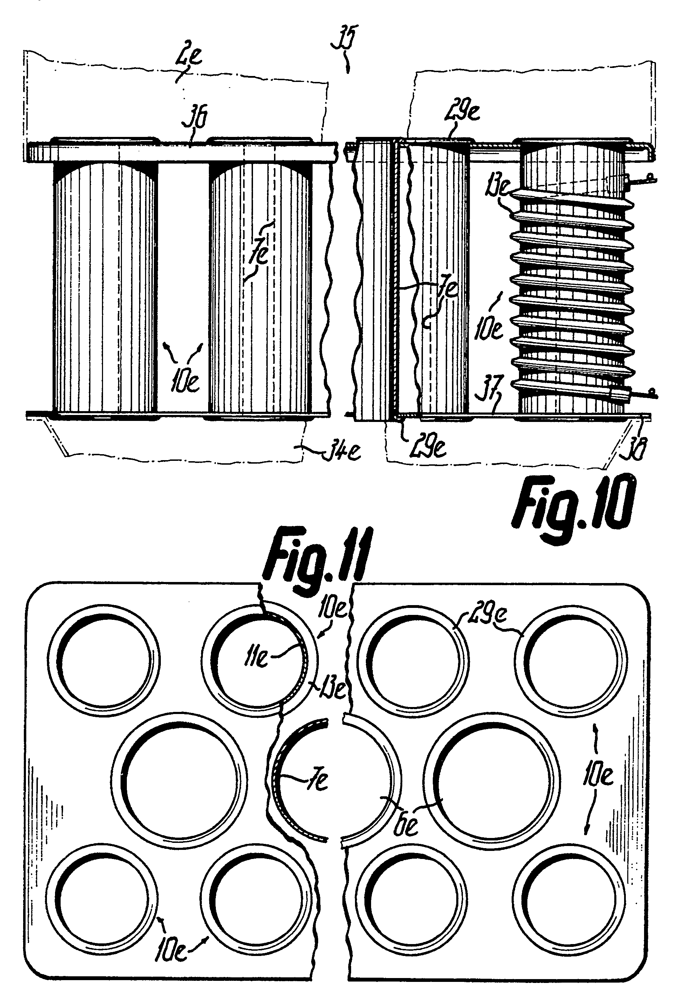

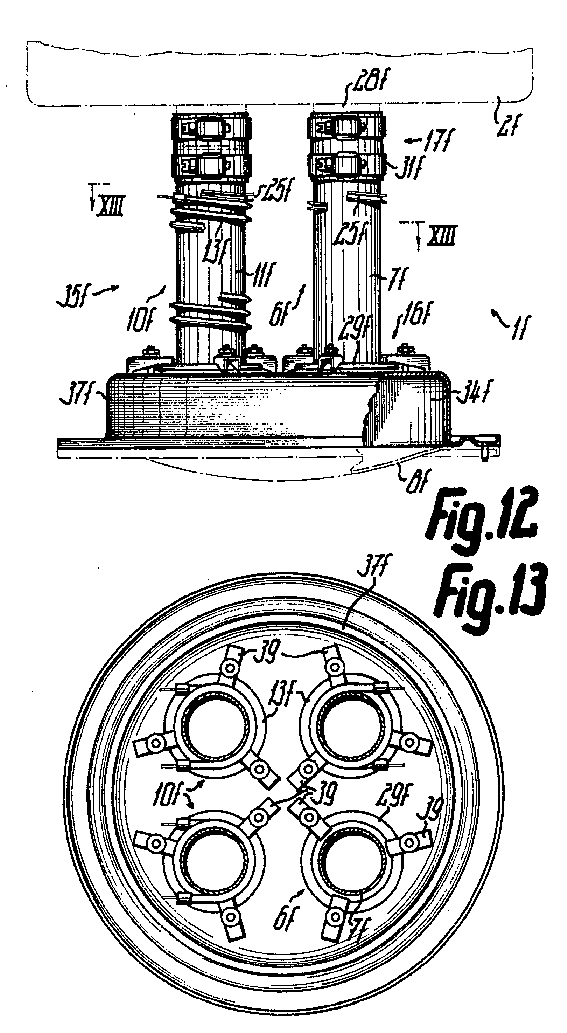

In den Figuren 10 und 11 ist eine solche Baueinheit 35 mit zwei parallelen Reihen parallel stehender Durchlauferhitzer 10e dargestellt, wobei zwischen diesen beiden Reihen eine weitere Reihe mit entsprechenden Rohren als Medienrücklauf 6e vorgesehen ist. Die letzteren Rohre 7e können im Durchmesser größer als die Rohre 11e der Durchlauferhitzer 10e, aber auch bevorzugt gleich groß sein, wobei sich Rohre mit einem Durchmesser zwischen 20 und 70 mm, vorzugsweise 40 mm als besonders vorteilhaft erwiesen haben. Die Enden der Rohre 11e, 7e durchsetzen die Flanschkörper 36, 37 und sind als gegen deren jeweils zugehörige Oberfläche angelegte und ggf. verlötete oder ähnlich dicht befestigte Bördelränder 29e ausgebildet. Sind beide Flanschkörper gleich ausgebildet, so kann die Baueinheit ggf. in jeder beliebigen Wendelage quasi gleich wirkend montiert werden. Gemäß Fig. 10 sind zwei verschiedene Flanschkörper 36, 37 dargestellt, von welchen der untere bis zu seinem Außenumfang eben plattenförmig ausgebildet ist, während der obere Flanschkörper 36 am Außenumfang einen abgewinkelten Randsteg aufweist, der von der Mitte der Rohre weg gerichtet oder, wie dargestellt, zu dieser Mitte hin gerichtet sein kann. Der Erfindungsgegenstand ist hier also ein Heizungsbausatz, der eine bestimmte Anzahl von Durchlauferhitzern und Rücklaufrohren enthält, die in Boden- und Stirnplatten als Flanschkörper eingeschweißt sind. Dieser Heizungsbausatz kann dann praktisch an jede beliebige Form von Medienkammern 2e, 34e angeschlossen werden, wobei beispielsweise die Mantelwand 3e unmittelbar an dem Randsteg oder am Außenumfang des Flanschkörpers 36, beispielsweise durch Schweißen oder lösbar befestigt werden kann. Der Rand des Flanschkörpers kann auch als Abschmelzrand 38 so ausgebildet sein, daß er ohne Schweißmaterial-Zusatz durch partielles Abschmelzen direkt mit einem weiteren, insbesondere ebenengleich an ihm anliegenden Wandungsteil an den gemeinsamen Kanten verschweißt werden kann. In den Fig. 10 und 11 sind die in Draufsicht gleich großen Flanschkörper 36, 37 rechteckig, insbesondere länglich-rechteckig und deckungsgleich angeordnet, wobei alle Rohre in einem Abstand zueinander stehen, der höchstens so groß wie ihr Durchmesser insbesondere höchstens so große wie ihr halber Durchmesser ist. Durch die rohrförmige Ausbildung der Durchlauferhitzer ergeben sich sehr große beheizte Flächen, so daß Heizleistungen über 9 kW bis zu 15 kW und mehr in einem Medien-Erhitzer raumsparend installiert werden können. Durch entsprechende Verschaltung der Durchlauferhitzer kann dann die Leistung, je nach den Erfordernissen, stufenlos oder in Stufen mit Hilfe eines handbetätigbaren Schaltgerätes verändert werden. Durch die erfindungsgemäße Ausbildung kann auch auf Strömungs- bzw. Leitbleche verzichtet werden. Derselbe Durchlauferhitzer bzw. dieselbe Baueinheit kann durch die erfindungsgemäße Ausbildung wahlweise zur Beheizung unterschiedlichster Medien, zum Beispiel entweder zur Beheizung von Fett oder zur Beheizung von Wasser verwendet werden, ohne daß hierfür irgendwelche konstruktiven Änderungen erforderlich sind.

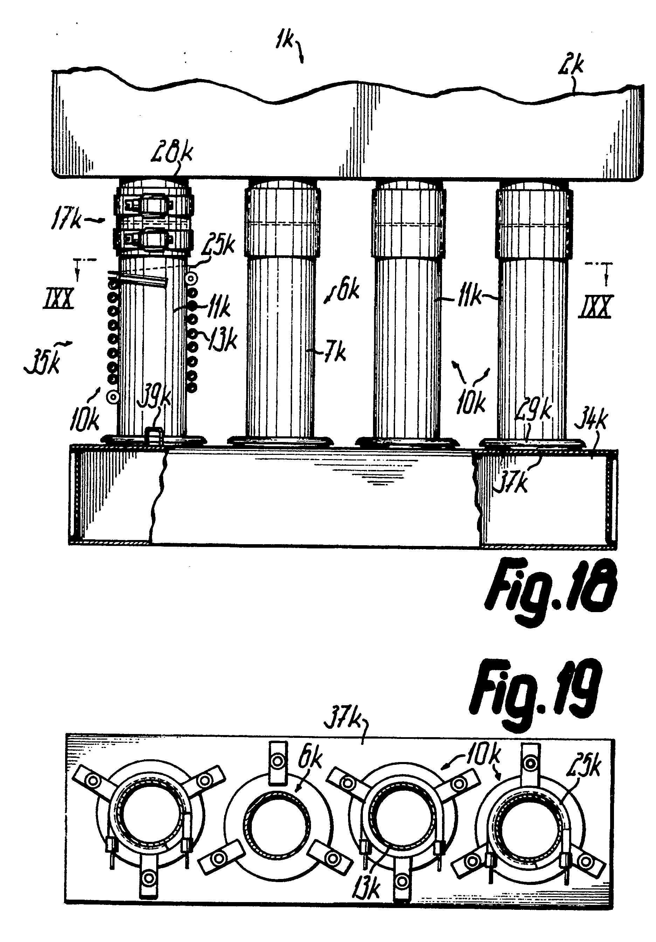

In den Figuren 12 bis 17 ist ein Medien-Erhitzer 1f dargestellt, der insbesondere für in Draufsicht runde Geräte, wie Kessel oder Behälter vorgesehen ist. Solche Geräte werden zum Beispiel als Koch- bzw. Schnellkochkessel in Großküchen verwendet und weisen bisher einen doppelwandigen Kessel aus zwei ineinandergesetzten Einzelkesseln auf, von welchen der Innenkessel am Boden und seinem Außenumfang vom Dampf beaufschlagt wird, während der mit seinem oberen Rand am Innenkessel im wesentlichen dicht anliegende und ansonsten gegenüber dem Innenkessel im wesentlichen berührungsfreie Außenkessel den Dampfraum nach außen begrenzt. Derartige Kochkessel sind sehr aufwendig und bedürfen einer relativ hohen Wassermenge, um die Heizkörper stets unterhalb des Wasserspiegels zu halten und so ein Trockengehen zu vermeiden. Demgegenüber ist gemäß der Erfindung bei einem solchen Gerät ein Dampf-Umlauferhitzer vorgesehen, in welchem praktisch nur die Wassermenge benötigt wird, welche auch in Dampf umgesetzt wird, wobei das Medium ständig in Zirkulation gehalten wird. Die Baueinheit 35f weist in diesem Ausführungsbeispiel nur einen unteren Flanschkörper 37f auf, an dessen obenliegender Bodenwand eine Mehrzahl von Rohren auf einem Teilkreis um die Mittelachse des Flanschkörpers 37f bzw. des Medien-Erhitzers 1f lös- bzw. auswechselbar befestigt ist. Die oberen Enden der Rohre 7f, 11f liegen in gleicher Höhe und sind im Bereich der Anschlüsse 17f an nach unten ragenden Rohrstützen 28f der Bodenwand der Medienkammer 2f lösbar zu befestigen, wobei je Anschluß 17f zwei übereinander liegende Rohrschellen 31f vorgesehen sind. Die unteren Enden der Rohre 7f, 11f sind zu Flanschringen 29f geformt, welche außerhalb des Außenumfanges der Rohre 7f, 11f liegen und unter Aufnahme jeweils einer Ringdichtung 30f mit Spannpratzen 39 gegen die Außenfläche der Bodenwand des Flanschkörpers 37f so gespannt sind, daß die Rohre noch ein geringes Stück weit zentriert in den Flanschkörper 37f hineinragen. Dadurch ergibt sich in diesem Bereich eine verhältnismäßig starre Befestigung. Insbesondere in diesem Fall ist es vorteilhaft, wenn die anderen Enden der Rohre des Medien-Erhitzers 1f mittels eines elastischen, auf die Rohrstutzen 28f und die Rohre 7f, 11f aufgesteckten Schlauches aus Gummi o.dgl. erfolgt, so daß Maßtoleranzen bzw. Dichtungstoleranzen sehr leicht ausgeglichen werden können. Die untere, durch die Napföffnung offene Seite des Flanschkörpers 37f kann mit einem Deckel 8f in Form beispielsweise eines Klöpperbodens verschlossen werden, wobei dieser Deckel 8f gemäß den Fig. 12 und 16, 17 lösbar oder gemäß Fig. 15 unlösbar, beispielsweise durch eine Schweißverbindung, befestigt sein kann. Im letzten Fall ist der Innenraum der Zulaufkammer 34f trotzdem zugänglich, nämlich nach Abnehmen der Rohre 7f, 11f. Wird dieses Gerät nicht zur Dampferzeugung eingesetzt, sondern nur zur Aufheizung von Wasser, so ist die Zulaufkammer 34f auch dafür geeignet, den anfallenden Kalk zu sammeln.

Wie Fig. 12 ferner zeigt, können Halteprofile 25f bzw. Temperaturfühler wahlweise an mindestens einem Durchlauferhitzer 10f als auch an mindestens einem Medienrücklauf 6f oder an beiden vorgesehen sein, so daß sich also die Heizleistung sowohl nach der Vorlauftemperatur wie auch nach der Rücklauftemperatur steuern läßt. Das am Außenumfang des Rohres 7f des Medienrücklaufes 6f angebrachte Halteprofil 25 befindet sich nahe benachbart zu dessen oberen Ende und nimmt zweckmäßig den Temperaturfühler eines die Heizwiderstände 13f beeinflussenden Temperaturreglers auf. Das am Außenumfang des Rohres 11f des Durchlauferhitzers 10f angebrachte Halteprofil 25f bzw. der zugehörige Temperaturfühler befindet sich ebenfalls im Bereich des oberen Rohrendes und unmittelbar benachbart zur obersten Windung des Heizwiderstandes 13f, wobei der zugehörige Temperaturfühler zweckmäßig einen Temperaturbegrenzer beeinflußt und damit auch als Trockengehschutz geeignet ist. Dieser Temperaturfühler wird nicht nur von der Rohr- bzw. Medientemperatur, sondern auch unmittelbar vom Heizwiderstand 13f beeinflußt, so daß er sehr schnell anspricht. Die Halteprofile 25f sind zweckmäßig durch eine haftend in ihre zugehörige Oberfläche sowie in die Oberfläche des Rohres 7f bzw. 11f und daher auch in die Poren dieser Oberflächen eingreifende metallische Zwischenschicht hochwärmeleitfähig befestigt. Das Halteprofil 25f bzw. der Temperaturfühler umgibt das zugehörige Rohr dabei annähernd über dessen gesamten Umfang, vorzugsweise wendelförmig mit derselben Steigung wie der Heizwiderstand 13f.

Gemäß Fig. 15 ist der von den Rohren abgekehrte Rand des Mantels des Flanschkörpers 37g zu einem nach außen gerichteten Ringflansch geformt, der als Abschmelzrand zur direkten Verschweißung mit der Bodenwand 8g geeignet ist.

Bei der Ausführungsform nach Fig. 16 ist ein ähnlicher Ringflansch des Flanschkörpers 37h zur lösbaren Befestigung des Bodens 8h mittels einer Kegelflansch-Verbindung vorgesehen, welche den Ringflansch sowie einen entsprechenden Ringflansch des Bodens 8h unter Zwischenlage einer Ringdichtung mit zwei stumpfwinklig kegelförmigen inneren Ringflächen gegeneinander verspannt.

Bei der Ausführungsform gemäß Fig. 17 weist der Ringflansch des Flanschkörpers 37i noch einen äußeren, abgewinkelten Ringrand auf, wobei an dem Ringflansch Stehbolzen durch Schweißen o.dgl. befestigt sind, so daß der Boden 8i unter Zwischenlage einer flachen Ringdichtung lösbar befestigt werden kann. Eine ähnliche Befestigung ist auch bei der Ausführungsform nach Fig. 12 vorgesehen, wobei jedoch der Ringflansch des Flanschkörpers 37f eine Ringnut zur Aufnahme einer O-ringförmigen Dichtung bildet, so daß die Stehbolzen nicht, wie bei der Ausführungsform nach Fig. 17, die Dichtung zu durchsetzen brauchen.

Die Medienkammer ist, insbesondere bei der Ausführungsform nach den Fig. 12 bis 17 zum Beispiel dafür geeignet, den Außenkessel für den in ihn als eigentliches Kochgefäß eingesetzten Innenkessel zu bilden, der dann vom Dampf beaufschlagt wird. Die Medienkammer kann aber auch direkt das Kochgefäß, beispielsweise eines Großküchen-Dampfgargerätes bilden, wofür dann insbesondere eine Ausbildung des Medien-Erhitzers 1k gemäß den Fig. 18 und 19 geeignet ist. Bei dieser Ausführungsform sind alle Durchlauferhitzer 10k sowie mindestens ein Medienrücklauf 6k in einer einzigen Reihe nebeneinander angeordnet, so daß sich eine länglich-rechteckige und damit sehr raumsparende Grundform des Medien-Erhitzers 1k ergibt. Dieser Medien-Erhitzer 1k kann benachbart zu einer Außenwand der Medienkammer 2k, beispielsweise benachbart zu dessen Rückwand angeschlossen und in dem unterhalb des Kochkessels befindlichen Schalterraum untergebracht werden, wobei die Austrittsöffnungen 15k der Durchlauferhitzer 10k bzw. entsprechende Eintrittsöffnung des Medienrücklaufes 6k in geeigneter Weise gegen Eindringen von Kochgut abgedeckt sind.

## Ansprüche

1. Medien-Erhitzer mit mindestens einem elektrisch beheizten und einer Medienkammer (2, 2c, 2d, 2e, 2f, 2k) zugeordneten Strömungskanal, der einen rohrförmigen Durchlauferhitzer (10, 10c, 10d, 10e, 10f, 10k) mit Thermosyphonwirkung und Medienöffnungen in Form von Medien-Eintritts- und Medien-Austrittsöffnungen (14, 15; 14c, 15c; 14d, 15d) sowie mindestens einen Verbindungsflansch (36, 37;

37k) aufweist, von denen einer den Außenumfang des Durchlauferhitzers mit einem Flanschteil zur Befestigung des Durchlauferhitzers an einer Kammer-Wand (3d, 3e) überragt, dadurch gekennzeichnet, daß mindestens ein Verbindungsflansch (36, 37, 37k) plattenförmig ausgebildet ist und einen Platten-Rand (38) zur unmittelbaren Befestigung an mindestens einer Kammer-Wand (3d, 3e) sowie als Stirnplatte des Durchlauferhitzers (10, 10c, 10d, 10e, 10f, 10k) eine plattenförmige Raumbegrenzung einer Kammer oder Nische bildet, wobei die plattenförmige Raumbegrenzung vom Strömungskanal mindestens eines zugehörigen Durchlauferhitzers (10, 10c, 10d, 10e, 10f, 10k) durchsetzt ist.

2. Medien-Erhitzer nach Anspruch 1, dadurch gekennzeichnet, daß zwei plattenförmige Flanschkörper (36, 37) an beiden Enden mindestens eines Durchlauferhitzers (10e) vorgesehen und insbesondere über eine Querwandung (7) miteinander verbunden sind, die mit den Flanschkörpern (36, 37) eine einspringende Nische bildet, in welcher zwischen einem und mehreren Durchlauferhitzern geschützt angeordnet sind, wobei die Flanschkörper vorzugsweise gleich ausgebildet sind.

3. Medien-Erhitzer nach einem der vorhergehenden Ansprüche, dadurch gekennzeichnet, daß mindestens ein Durchlauferhitzer (10d, 10e) durch einen im wesentlichen geradlinigen und mit seinen Abschnittenden die zugehörigen Medienöffnungen bildenden Rohrabschnitt (11d, 11e) von im wesentlichen konstanter Innenweite gebildet ist, der vorzugsweise mit die Flanschkörper durchsetzenden, flanschfreien Enden dicht befestigt und zylindrisch ist, wobei insbesondere mindestens ein Flanschkörper (36) einen napfförmigen Bauteil bildet.

4. Medien-Erhitzer nach einem der vorhergehenden Ansprüche, dadurch gekennzeichnet, daß mindestens ein Durchlauferhitzer (10e) mit dem Flanschteil als Heizungsbausatz eine in sich geschlossene Montage-Baugruppe (35) zur Befestigung an der Medienkammer (2e) bildet, wobei vorzugsweise an den Stirnplatten des Flanschteiles eine Mehrzahl von berührungsfrei in mindestens einer Reihe nebeneinander stehenden Durchlauferhitzern (10e) befestigt ist, deren lichte Zwischenabstände kleiner als ihre Außendurchmesser sind und die insbesondere gleich ausgebildet sowie einer gemeinsameren Zulaufkammer (34) zugeordnet sind, die an mindestens einen benachbarten Medienrücklauf (6e) angeschlossen ist.

5. Medien-Erhitzer nach einem der vorhergehenden Ansprüche, dadurch gekennzeichnet, daß an einem Rohr (11d) des jeweiligen Durchlauferhitzers ein Heizwiderstand bzw. Rohrheizkörper (13d) wendelförmig und metallisch wärmeleitend angeordnet ist, der vorzugsweise mit einer abgeflachten Seite im Bereich des Außenumfanges des Rohres befestigt ist, wobei insbesondere Anschlußenden aller Heizwiderstände von der Querwandung (7d) weg nach außen gerichtet sind.

6. Medien-Erhitzer nach einem der vorhergehenden Ansprüche, dadurch gekennzeichnet, daß mindestens ein Durchlauferhitzer (10) als Medienvorlauf außerhalb des Medienraumes im wesentlichen an der Unterseite der Medienkammer (2) benachbart zu mindestens einem im Bereich der Unterseite an die Medienkammer (2) angeschlossenen Medienrücklauf, wie einem Medienschacht (6), angeordnet ist, der wie der Durchlauferhitzer gegenüber dem Außenumfang der Medienkammer (2) zurückversetzt ist, wobei insbesondere im Zentrum des Medienschachtes (6) ein Leit- oder Verdrängungskörper (9), wie ein nach oben verjüngter Kegelstumpf angeordnet ist.

7. Medien-Erhitzer nach einem der vorstehenden Ansprüche, dadurch gekennzeichnet, daß die obenliegende Medien-Austrittsöffnung (15) mindestens eines Durchlauferhitzers (10) von oben zugänglich und etwa in einer horizontalen Ebene liegend einer unteren Schulterwand (5) der Medienkammer (2) zugeordnet ist, wobei insbesondere das eingangsseitige Ende des Durchlauferhitzers (10) durch einen abgewinkelten, mit der Medien-Eintrittsöffnung (16) in einer aufrechten Wandung (7) liegenden Rohrschenkel (12) gebildet ist.

8. Medien-Erhitzer nach einem der vorhergehenden Ansprüche, dadurch gekennzeichnet, daß mehrere Durchlauferhitzer in einander gegenüberliegenden Reihen und/oder in einem Kranz um eine Mittelachse (18) der Medienkammer (2) angeordnet sind und daß vorzugsweise die Austrittsöffnungen (15) mehrerer Durchlauferhitzer (10) in einem gemeinsamen Wandungsteil (5) vorgesehen sind, der in Form mindestens einer Schulter an eine Mantelwand (3) der Medienkammer (2) anschließt, wobei mindestens der durch die Medienkammer (2) und einen Medienschacht gebildeten Bauteile wenigstens teilweise rund oder in Draufsicht länglich-rechteckig ist.

9. Medien-Erhitzer nach einem der vorhergesehenen Ansprüche, dadurch gekennzeichnet, daß ein Medienrücklauf (6e) durch mindestens einen von der Medienkammer (2e) gesonderten Rücklaufkanal, insbesondere ein zum Rohr (11e) mindestens eines Durchlauferhitzers (10e) benachbartes, jedoch unbeheiztes Rohr (7e) gebildet ist und vorzugsweise durch gemeinsame Befestigung am Flanschteil (36, 37) mit mindestens einem Durchlauferhitzer (10e) zur Montage-Baugruppe (35) gehört, wobei das Eintrittsende des jeweiligen Durchlauferhitzers und das Austrittsende des jeweiligen Rücklaufkanales (6e) unten liegt und mindestens ein Flanschkörper (36 bzw. 37) die einzige tragende Verbindung zwischen dem jeweiligen Durchlauferhitzer (10e) und dem Rücklaufkanal (6e) bildet.

10. Medien-Erhitzer nach einem der vorhergehenden Ansprüche, dadurch gekennzeichnet, daß mindestens ein durch einen Durchlauferhitzer (10) bzw. einen Rücklaufkanal (6e) gebildeter Bauteil als geschlossene Baueinheit abnehmbar angeordnet und mit beiden Enden über lösbare Rohrkupplungen o. dgl. lösbar befestigt ist, und daß vorzugsweise mindestens eine Rohrkupplung für den Anschluß des Durchlauferhitzers (10c) eine stirnseitige Ringdichtung aufweist, die zwischen einem Rohrstutzen (28) und einem Flanschring (29) mit einer Gewindemuffe (31) und einer Überwurfmutter (32) oder mit über den Umfang verteilten Spannpratzen (39) verspannt ist.

11. Medien-Erhitzer nach einem der vorhergehenden Ansprüche, dadurch gekennzeichnet, daß an der Außenseite und wenigstens über einen Teil des Umfanges wenigstens eines durch mindestens einen Medien-Rücklauf bzw. mindestens einen Durchlauferhitzer gebildeten Kanales ein Temperaturfühler (24) angeordnet ist, wobei vorzugsweise an dem jeweiligen Kanal ein Tragprofil (25) für die eng umschlossene Aufnahme des mit einer Ausdehnungsflüssigkeit gefüllten Temperaturfühlers (24) in unmittelbar metallisch wärmeleitender Verbindung befestigt ist, das am Durchlauferhitzer (10a) im oberen Endbereich annähernd unmittelbar wärmeleitend mit dem Heizwiderstand (13a) verbunden ist.

12. Medien-Erhitzer nach einem der vorhergehenden Ansprüche, dadurch gekennzeichnet, daß eine an das obere Ende mindestens eines Durchlauferhitzers (10) anzuschließende Medienkammer (2) als Fettwanne einer Friteuse sowie die an das untere Ende anzuschließende Kammer (34) als unbeheizte Fettsumpf-Kammer ausgebildet sind oder daß mindestens ein Durchlauferhitzer (10e) als Heißwasserbereiter bzw. als Dampferzeuger sowie die an das untere Ende des Durchlauferhitzers anzuschließende Kammer (34e) als öffenbarer Kalk-Sammelbehälter ausgebildet sind.

## Claims

1. Medium heater with at least one electrically heated flow passage associated with a medium chamber (2, 2c, 2d, 2e, 2f, 2k) and which has a tubular continuous heater (10, 10c, 10d, 10e, 10f, 10k) with a thermal siphon action and medium openings in the form of medium inlets and outlets (14, 15 ; 14c, 15c ; 14d, 15d), as well as at least one connecting flange (36, 37 ; 37k), whereof one projects over the outer circumference of the continuous heater with a flange part for fixing said heater to a chamber wall (3d, 3e), characterized in that at least one connecting flange (36, 37, 37k) has a plate-like construction and a plate edge (38) for direct fixing to at least one chamber wall (3d, 3e) and as the end plate of the continuous heater (10, 10c, 10d, 10e, 10f, 10k) forms a plate-like spatial boundary of a chamber or recess, the plate-like spatial boundary being traversed by the flow passage of at least one associated continuous heater (10, 10c, 10d, 10e, 10f, 10k).

2. Medium heater according to claim 1, characterized in that two plate-like flanges (36, 37) are provided at both ends of at least one continuous heater (10e) and are interconnected via a transverse wall (7), which with the flanges (36, 37) forms a reentrant recess, in which can be arranged one or more continuous heaters in protected manner, the flanges preferably being identical.

3. Medium heater according to one of the preceding claims, characterized in that at least one continuous heater (10d, 10e) is formed by a substantially linear pipe section (11d, 11e) having a substantially constant inside width and whose section ends form the associated medium openings and which is preferably tightly fixed and cylindrical with flange-free ends passing through the flanges and in particularly at least one flange (36) forms cup-shaped component.

4. Medium heater according to one of the preceding claims, characterized in that at least one continuous heater (10e) forms with the flange part as a heating assembly set a closed subassembly (35) for fixing to the medium chamber (2e) and preferably to the end plates of the flange part is fixed a plurality of contact-free, juxtaposed continuous heaters (10e) in at least one row and whose internal spacings are smaller than their external diameter and which are in particular identical and which can be associated with a common supply chamber (34), which is connected to at least one adjacent medium return (6e).

5. Medium heater according to one of the preceding claims, characterized in that a heating resistor or tubular heater (13d) is helically and metallically thermally conductively located on a pipe (11d) of the continuous flow heater and is preferably fixed by a flattened side in the vicinity of the outer circumference of the pipe and in particular the connecting ends of all the heating resistors are directed outwards away from the transverse wall (7d).

6. Medium heater according to one of the preceding claims, characterized in that at least one continuous heater (10) as the medium outward supply is located outside the medium space substantially on the underside of the medium chamber (2) adjacent to at least one medium return connected close to the underside to the chamber (2), such as a medium shaft (6) and which in the same way as the continuous heater is set back with respect to the outer circumference of the medium chamber (2) and in particular in the centre of the medium shaft (6) is provided a displacer (9), such as an upwardly tapering frustum.

7. Medium heater according to one of the preceding claims, characterized in that the top medium outlet (15) of at least one continuous heater (10) is accessible from above and roughly in a horizontal plane is associated with a lower shoulder wall (5) of the medium chamber (2) and in particular the inlet-side end of the continuous heater (10) is formed by a bent pipe clip (12) located in an upright wall (7) with the medium inlet (16).

8. Medium heater according to one of the preceding claims, characterized in that several continuous heaters are arranged in facing nows and/or in a ring about a centre axis (18) of the medium chamber (2) and that preferably the outlets (15) of several continuous heaters (10) are located in a common wall part (5), which connects in the form of at least one shoulder to a casing wall (3) of the medium chamber (2) and at least the components formed by the medium chamber (2) and a medium shaft are at least partly circular or elongated rectangular in plan view.

9. Medium heater according to one of the preceding claims, characterized in that a medium return (6e) is formed by at least one return passage separate from the medium chamber (2e) and in particular an unheated pipe (7e) adjacent to the pipe (11e) of at least one continuous heater (10e) and preferably by joint fixing to the flange part (36, 37) with at least one continuous heater (10e) belongs to the subassembly (35), the inlet end of the continuous heater and the outlet end of the return passage (6e) being located at the bottom and at least one flange (36 or 37) forms the sole bearing connection between the continuous heater (10e) and the return passage (6e).

10. Medium heater according to one of the preceding claims, characterized in that at least one component formed by a continuous heater (10) or a return passage (6e) is removably positioned as a closed unit and is detachably fixed with both ends by detachable pipe couplings or the like and that preferably at least one pipe coupling for the connection of the continuous heater (10c) has a frontal ring seal, which is braced between a pipe connection (28) and a flange ring (29) with a threaded sleeve (31) and a box nut (32) or with circumferentially distributed bracing means (39).

11. Medium heater according to one of the preceding claims, characterized in that on the outside and at least over part of the circumference of at least one passage formed by at least one medium return or continuous heater is provided a temperature sensor (24) and preferably to the particular passage is fixed a support profile (24) for the tightly surrounded reception of a temperature sensor (24) filled with expansion fluid in direct metallic heat conducting connection and on the continuous heater (10a) in the upper end region is approximately directly thermally conductively connected to the heating resistor (13a).

12. Medium heater according to one of the preceding claims, characterized in that a medim chamber (2) to be connected to the upper end of at least one continuous heater (10) is constructed as a fat container of a deep fat fryer, whilst the chamber (34) to be connected to the lower end is constructed as an unheated fat sump chamber or that at least one continuous heater (10e) is constructed as a water or steam heater, as well as the chamber (34e) to be connected to the lower end of the continuous heater is constructed as an openable lime collector.

## Revendications

1. Appareil pour chauffer des fluides, avec au moins un canal d'écoulement électriquement chauffé, qui est associé à une chambre de fluide (2, 2c, 2d, 2e, 2f, 2k) et qui présente un élément tubulaire de chauffage instantané (10, 10c, 10d, 10e, 10f, 10k) à effet de thermosiphon et des ouvertures pour le fluide sous forme d'ouvertures d'entrée de fluide et d'ouvertures de sortie de fluide (14, 15 ; 14c, 15c ; 14d, 15d), ainsi qu'au moins une bride d'assemblage (36, 37 ; 37k), dont une dépasse de la périphérie extérieure de l'élément de chauffage instantané par une partie de bride destinée à fixer ledit élément à une paroi (3d, 3e) de la chambre, caractérisé en ce qu'au moins une bride d'assemblage (36, 37, 37k), configurée en forme de plaque, forme un bord de plaque (38) pour la fixation directe à au moins une paroi (3d, 3e) de la chambre et forme également, en tant que plaque frontale de l'élément de chauffage instantané (10, 10c, 10d, 10e, 10f, 10k), une délimitation spatiale en forme de plaque d'une chambre ou niche, délimitation qui est traversée par le canal d'écoulement d'au moins un élément de chauffage instantané associé (10, 10c, 20d, 10e, 10f, 10k).

2. Appareil pour chauffer des fluides selon la revendication 1, caractérisé en ce qu'il est prévu deux corps de brides (36, 37) aux deux extrémités d'au moins un élément de chauffage instantané (10e), qui sont notamment mutuellement reliés par l'intermédiaire d'une paroi transversale (7) qui forme, avec les corps de brides (36, 37), une niche rentrante dans laquelle un ou plusieurs éléments de chauffage instantané se trouvent protégés, les corps de brides étant de préférence identiquement configurés.

3. Appareil pour chauffer des fluides selon l'une des revendications précédentes, caractérisé en ce qu'au moins un élément de chauffage instantané (10d, 10e) est constitué d'un tronçon de tube (11d, 11e) de diamètre intérieur sensiblement constant, sensiblement rectiligne, qui forme par ses extrémités les ouvertures de fluide associées et qui est de préférence cylindrique et hermétiquement fixé par des extrémités exemptes de brides qui traversent les corps de brides, au moins un corps de bride (36) constituant notamment une pièce en forme de cuvette.

4. Appareil pour chauffer des fluides selon l'une des revendications précédentes, caractérisé en ce qu'au moins un élément de chauffage instantané (10e) constitue avec la partie de bride, en tant que lot de chauffage, un groupe de montage en soi fermé (35) à fixer à la chambre de fluide (2e), plusieurs éléments de chauffage instantané (10e), juxtaposés sans contact en au moins une rangée, étant de préférence fixés aux plaques frontales de la partie de bride, les espaces intermédiaires libres entre ces éléments étant inférieurs à leur diamètre extérieur, et les éléments étant notamment identiquement configurés et associés à une chambre d'arrivée commune (34), qui est raccordée à au moins un retour de fluide voisin (6e).

5. Appareil pour chauffer des fluides selon l'une des revendications précédentes, caractérisé en ce qu'une résistance chauffante ou un corps chauffant tubulaire (13d) est disposé en hélice et de manière métalliquement thermoconductrice sur un tube (11d) de l'élément de chauffage instantané respectif, et est de préférence fixé par un côté aplati dans la région de la périphérie extérieure du tube, les extrémités de raccordement de toutes les résistances chauffantes étant notamment dirigées vers l'extérieur, en éloignement de la paroi transversale (7d).

6. Appareil pour chauffer des fluides selon l'une des revendications précédentes, caractérisé en ce qu'au moins un élément de chauffage instantané (10) est disposé, en tant qu'aller de fluide, à l'extérieur de la chambre de fluide, essentiellement sur le côté inférieur de la chambre de fluide (2) et au voisinage d'au moins un retour de fluide, tel qu'un puits de fluide (6) qui est raccordé à la chambre de fluide (2) dans la région du côté inférieur et qui, comme l'élément de chauffage instantané, se trouve en retrait par rapport à la périphérie extérieure de la chambre de fluide (2), un corps de guidage ou encore de refoulement (9), tel qu'un cône tronqué rétréci vers le haut, étant notamment disposé au centre du puits de fluide (6).

7. Appareil pour chauffer des fluides selon l'une des revendications précédentes, caractérisé en ce que l'ouverture de sortie de fluide (15) d'au moins un élément de chauffage instantané (10), laquelle se trouve sur le dessus, est accessible par le haut et est associée à une paroi d'épaulement inférieure (5) de la chambre de fluide (2), en étant disposée approximativement dans un plan horizontal, l'extrémité d'entrée de l'élément de chauffage instantané (10) étant notamment formée par un tronçon de tube coudé (12), dont l'ouverture d'entrée de fluide (16) se trouve dans une paroi verticale (7).

8. Appareil pour chauffer des fluides selon l'une des revendications précédentes, caractérisé en ce que plusieurs éléments de chauffage instantané sont disposés en rangées se faisant face et/ou en couronne autour d'un axe médian (18) de la chambre de fluide (2), et en ce que les ouvertures de sortie (15) de plusieurs éléments de chauffage instantané (10) sont prévues dans une partie de paroi commune (5) qui se raccorde sous forme d'au moins un épaulement à une paroi d'enveloppe (3) de la chambre de fluide (2), au moins l'élément constructif formé par la chambre de fluide (2) et un puits de fluide étant au moins partiellement rond ou, vu de dessus, oblong et rectangulaire.

9. Appareil pour chauffer des fluides selon l'une des revendications précédentes, caractérisé en ce qu'un retour de fluide (6e) est formé par au moins un canal de retour séparé de la chambre de fluide (2e), notamment un tube (7e), voisin du tube (11e) d'au moins un élément de chauffage instantané (10e) mais cependant non chauffé, et fait partie, avec au moins un élément de chauffage instantané (10e), du groupe de montage (10e), de préférence par fixation commune à la partie de bride (36, 37), l'extrémité d'entrée de l'élément de chauffage instantané respectif et l'extrémité de sortie du canal de retour respectif (6e) se trouvant en bas, et au moins un corps de bride (36 ou 37) constituant la seule liaison porteuse entre l'élément de chauffage instantané respectif (10e) et le canal de retour (6e).

10. Appareil pour chauffer des fluides selon l'une des revendications précédentes, caractérisé en ce qu'au moins un élément constructif constitué par un élément de chauffage instantané (10) ou un canal de retour (6e) est disposé avec possibilité de dépose en tant qu'unité constructive fermée et est fixé de manière amovible à ses deux extrémités par l'intermédiaire d'accouplements de tubes amovibles ou similaires, et en ce que, de préférence, au moins un accouplement de tube, pour le raccordement de l'élément de chauffage instantané (10c), présente un joint d'étanchéité annulaire du côté frontal, qui est serré entre un raccord tubulaire (28) et une bague de bridage (29) munie d'une douille filetée (31) et d'un écrou-raccord (32), ou de griffes de serrage (39) réparties sur la périphérie.

11. Appareil pour chauffer des fluides selon l'une des revendications précédentes, caractérisé en ce qu'un capteur de température (24) est disposé sur le côté extérieur et sur au moins une partie de la périphérie d'au moins un canal constitué par au moins un retour de fluide ou au moins un élément de chauffage instantané, un profilé porteur (25), destiné à recevoir en l'entourant étroitement le capteur de température (24) rempli d'un liquide à dilatation, étant de préférence fixé sur le canal respectif en liaison directement métalliquement thermoconductrice, profilé qui est assemblé à l'élément de chauffage instantané (10a) dans la région terminale supérieure, en liaison thermoconductrice approximativement directe avec la résistance chauffante (13a).

12. Appareil pour chauffer des fluides selon l'une des revendications précédentes, caractérisé en ce qu'une chambre de fluide (2), à raccorder à l'extrémité supérieure d'au moins un élément de chauffage instantané (10), est conçue comme cuve de graisse d'une friteuse, et la chambre (34) à raccorder à l'extrémité inférieure est conçue comme réservoir de graisse non chauffé, ou en ce qu'au moins un élément de chauffage instantané (10e) est conçu comme préparateur d'eau chaude ou encore comme producteur de vapeur, et la chambre (34e) à raccorder à l'extrémité inférieure de l'élément de chauffage instantané est conçue comme récipient collecteur ouvrable de calcaire.

Fig.1

Fig.2

Fig.3

Fig.4

Fig.5

Fig.6

Fig.7

Fig.8

**Fig.9**

Fig.10

Fig.11

**Fig.12**

**Fig.13**

Fig.14

Fig.15

Fig.16

Fig.17

Fig. 18

Fig. 19